# EUROPEAN PATENT APPLICATION

(11) **EP 1 739 909 A1**
(43) Date of publication of application: **03.01.2007**
(21) Application number: 05014160.5
(22) Date of filing: 30.06.2005
(51) Int. Cl.: H04L 27/26, H04B 1/10

(54) **Method and apparatus for reducing the interferences between a wide band device and a narrow band device interfering with said wide band device**

(71) Applicant: STMicroelectronics N.V., 1118 BH Schiphol Airport Amsterdam (NL)
(72) Inventor: Berens, Friedbert, 1202 Genève (CH)
(74) Representative: Zapalowicz, Francis

(57) **Abstract**

The method comprises an interference reduction mode (ADIRM) for reducing interferences between a wide band device and a narrow band device; said method is performed within said wide band device and includes the steps of detecting (130) an emission from and/or a reception performed by said narrow band device, determining (131) from said detection step a group of at least one sub-carrier having frequencies interfering with the narrow band device, frequency shifting (132) at least a part of frequency band of said wide band device including said group of at least one interfering sub-carriers with a chosen frequency shift such that at least a part of frequency band of said narrow band device is excluded from said frequency band of said wide band device.

## Description

The invention relates to the wireless communication systems, and more particularly to the processing of interferences within different wireless communication apparatuses.

A non-limitative application of the invention is directed to devices operating according to the Ultra Wide Band (UWB) standard based on OFDM (Orthogonal Frequency-Division Multiplexing), called MBOA (Multiband OFDM Alliance), which can generate interferences towards a WIMAX device which is a fix wireless device (Worldwide Interoperability for Microwave Access). Such a WIMAX device operates for example with a band width of 20 MHz at a central frequency of 3,5 GHz, whereas the frequency band of the MBOA system lies between 3,1 and 5,0 GHz.

Wireless personal area networks based on OFDM and UWB technologies like the MBOA standard will directly interfere to narrowband interferer which are close to such wide band devices. At present, no specific interference mitigation techniques are implemented in the UWB standard based on OFDM (MBOA).

Orthogonal frequency-Division Multiplexing (OFDM) is a method of digital modulation in which a signal is split into several narrowband channels (sub-carriers) at different frequencies. In order to avoid in-band spectral interference, WO 2005/006698 (INTEL) proposes to puncture, i.e. remove, selected sub-carriers. More precisely, this puncturing is made, taking into account channel knowledge, after the OFDM modulation in the transmitter, whereas a depuncturing is performed in the receiver before the OFDM demodulator. Because of the puncturing of some sub-carriers, the size of the encoded block of data which will be convert into OFDM symbols, has to be reduced. Consequently, not only the data rate but also the available resources on air have to be reduced leading to a loss of communication performance.

The invention intends to solve this problem.

An aim of the invention is to minimise the interference to and from an in-band victim device without reducing the available resources on the air and the data rate, leading thus to no loss of communication performance.

According to an aspect of the invention, it is thus proposed a method for reducing the interferences between a main device, for example a UWB MBOA device, adapted to transmit information on sub-carriers having frequencies belonging to a main band of frequencies and at least one auxiliary device, for example a WIMAX device, adapted to emit and/or receive information within an auxiliary band of frequencies, said auxiliary band being narrower than said main band and included within said main band.

According to this aspect of the invention, said method comprises an interference reduction mode for reducing the interference between said main device and said auxiliary device. Said interference reduction mode is performed within said main device and includes
- detecting an emission from and/or a reception performed by said at least one auxiliary device,
- determining from said detection step a group of at least one sub-carrier having frequency interfering with said auxiliary band of frequencies, and
- frequency shifting at least a part of said main band of frequencies including said group of at least one interfering sub-carriers with a chosen frequency shift such that at least a part of said auxiliary band is excluded from said main band of frequencies.

The man skilled in the art will adapt said frequency shift depending on the case, and more particularly on the width of the auxiliary band, the location of said auxiliary band within said main band, and the characteristics of said main band.

For example depending on the case, the greatest possible frequency shift may lead to a frequency shifting which is not enough for eliminating all the interfering frequencies from the main band used by the main device and thus eliminating all the interference, but enough for reducing the interference between the main device and the auxiliary device.

In another example, in particular when the auxiliary band is located near the limit of the main band, the frequency shift may be chosen such that the whole auxiliary band is excluded from said main band of frequencies.

Of course, when the main band of frequencies is delimited by upper and lower limits (for example for a UWB MBOA based device), the man skilled in the art will adapt said frequency shift such that, after shifting, the shifted part remains within the limits of said main band while being compatible with the non-shifted part of the main band of frequencies.

The frequency shift is for example at least equal to the width of the frequency band of said at least one auxiliary device.

When the main band of frequencies is subdivided into several different mutually spaced sub-bands, the shifting step comprises shifting at least the sub-band which contains at least a part of said group of interfering sub-carriers.

As an example, a 20 MHz narrow band carrier which can be the width of the auxiliary band of the auxiliary device (for example the WIMAX device) corresponds to only 1,3 % of the used UWB spectrum of a MBOA based device and corresponds for example to an interfering sub-carrier group of 5 or 7 sub-carriers.

Whereas the wide band device generates interference towards the narrow band interferer, there is also an in-band interference generated by the narrowband interferer in the wide band device even if it is less important. With this aspect of the invention, it is possible to minimise also such interferences generated by the narrowband interferer towards the wide band device.

The main device comprises generally a transmission chain containing a radiofrequency stage including controllable transposition means, and the frequency shifting step comprises advantageously modifying the transposition frequency of said transposition means.

According to an embodiment of the invention, the detecting step of the interference reduction mode comprises analysing a channel step information and detecting the operation of said at least one auxiliary device from said channel state information. Such channel state information can be delivered for example by a channel estimator generally incorporated in the wireless apparatus.

However, the detecting step preferably further comprises checking said operation detection by using a set of stored interference information respectively associated to a set of several different auxiliary devices.

In other words, in order to optimise the shifting process according to the invention, the spectral properties of the potential victim device (the auxiliary device) can be taken into account in the definition process of the frequency shift. Usually, only a limited amount of possible devices can be assumed as victim devices in the corresponding transmission band of the main device. These devices (e.g. WIMAX devices) are well defined and thus the band width and the potential carrier frequencies in use are well known. By using this information, it is much easier to define the sub-carriers to be shifted based on the channel state information. By using this *a posteriori* knowledge, groups can be predefined and easily set up. For example, a sub-carrier group of 5 or 7 sub-carriers can be defined for a WIMAX device with a band width of 20 MHz. The requirements on the frequency domain channel state information can thus be relaxed.

The interference reduction mode advantageously comprises regularly checking the operation of said auxiliary device and if said auxiliary device is no more detectable, the interference reduction mode concerning said no more detectable auxiliary device is stopped.

According to a variant of the invention, the main device and said at least one auxiliary device are all together incorporated within a single wireless communication apparatus. Thus, with such an embodiment, it is possible to have the simultaneous operation of two different air interfaces within a single wireless apparatus, for example a single mobile terminal, while the mutual interferences are minimised if not eliminated.

With such a collocation variant, an indication of said group of at least one sub-carrier having frequency interfering with said auxiliary band of frequencies of said auxiliary device, is advantageously stored within said apparatus and said detecting step of the interference reduction mode comprises advantageously receiving from said auxiliary device an auxiliary control information representative of the operation or of the non-operation of said auxiliary device such that said interference reduction mode is performed only during the operation of said auxiliary device.

Several different auxiliary devices may be respectively adapted to emit and/or receive information within several different auxiliary bands of frequency, each auxiliary band being narrower than said main band and included within said main band. In such a case, said interference reduction mode may be performed for at least some of said several different auxiliary devices provided that the chosen frequency shift is compatible with the characteristics of the main band and with said several auxiliary bands.

The main device can belong to a multi-carrier based Ultra Wide Band Communication system, for example but not exclusively, an OFDM based Ultra Wide Band Communication system.

Said at least one auxiliary device may belong to a fix wireless system (FWA, fixed wireless access) like a WIMAX system. However, it is also possible that such an auxiliary device belongs to a mobile radio system defined by a mobile radio standard like for example UMTS, GSM, CDMA, EDGE, beyond IMT-2000 systems, or to a fixed satellite system (FSS),

According to another aspect of the invention, it is also proposed a wireless communication apparatus comprising a main device having a transmission chain for transmitting information on sub-carriers having frequencies belonging to a main band of frequencies.

Said main device further includes interference reduction means for reducing the interferences between said main device and at least one auxiliary device adapted to emit and/or receive information within auxiliary band of frequencies, said auxiliary band being narrower than said main band and included within said main band.

Said interference reduction means includes
- detecting means for detecting an emission from and/or a reception performed by said at least one auxiliary device,
- a control unit connected to said detecting means for determining a group of at least one sub-carrier having frequencies interfering with said auxiliary band of frequencies, and for frequency shifting at least a part of said main band of frequencies including said group with a chosen frequency shift such that at least a part of said auxiliary band is excluded from said main band of frequencies

When the main band of frequencies is subdivided into several different mutually spaced sub-bands, the additional control unit is adapted to shift at least the sub-band which contains at least a part of said group of interfering sub-carriers.

According to an embodiment of the invention, the transmission chain comprises a radiofrequency stage including controllable transposition means, and the control unit is adapted to modify the transposition frequency of said transposition means for performing said frequency shifting.

According to an embodiment of the invention, the apparatus further comprises a channel estimation unit adapted to deliver a channel state information, and said detection means comprises analysing means for analysing said channel state information and detecting the operation of said at least one auxiliary device from said channel state information. Memory means may be provided for storing a set of interference information respectively associated to a set of several different auxiliary devices, and checking means may check said operation detection by using said stored set of interference information. A management unit may be provided for managing the operation of said additional interference reduction means. Said interference reduction means may be further adapted to regularly check the operation of said auxiliary device and if said auxiliary device is no more detectable said management unit is adapted to stop the interference reduction concerning said no more detectable auxiliary device.

When said main device and said at least one auxiliary device are all together incorporated within a single wireless communication apparatus, the apparatus comprises, according to an embodiment of the invention, a management unit adapted to manage the operation of said additional interference reduction means and memory means for storing an indication of said group of at least one sub-carrier having frequencies interfering with said auxiliary band of frequencies of said auxiliary device. Said auxiliary device comprises auxiliary control means for delivering an auxiliary control information representative of the operation or of the non operation of said auxiliary device such that said management unit is adapted to allow the operation of said interference reduction means only during the operation of said auxiliary device.

Other advantages and features of the invention will appear on examining the detailed description of embodiments, these being in no way limiting, and of the appended drawings in which :
- figure 1 illustrates diagrammatically the internal protocol structure of a wireless communication apparatus according to an embodiment of the invention,
- figure 2 illustrates a first embodiment of a method according to the invention,
- figure 3 illustrates more in details but still diagrammatically an internal structure of a wireless communication apparatus according to the invention,
- figures 4-7 illustrate diagrammatically flow charts related to an embodiment of a method according to the invention, and
- figure 8 illustrates diagrammatically another embodiment of a wireless communication apparatus according to the invention.

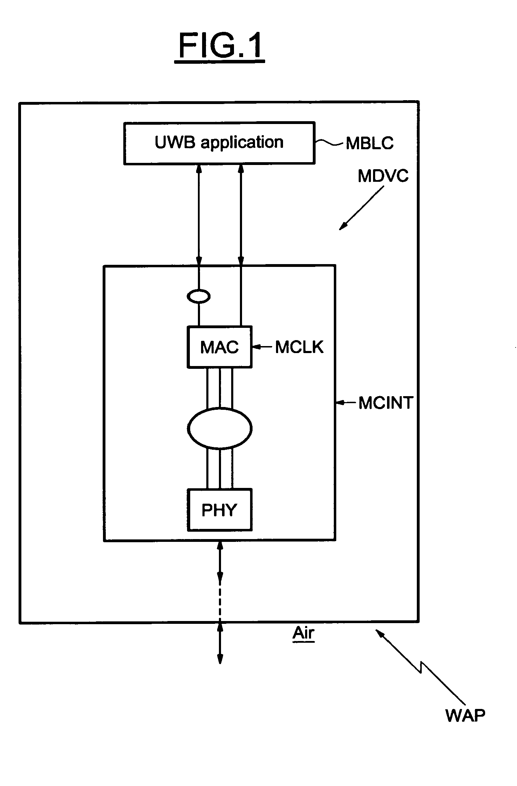

Figure 1 discloses an example of a wireless communication apparatus WAP belonging to a non-coordinated communication system such as a WLAN ("Wireless Local Area Network") or a WPAN ("Wireless Personal Area Network").

Such a wireless apparatus WAP belongs for example to an OFDM based Ultra Wide Band Communication system. However, the invention is not limited to such an example and can apply more generally to generalised multi-carrier (GMC) systems in which the carriers are not necessarily orthogonal.

WPAN MAC protocols have a distributed nature where there is no central coordinator terminal or base station to assign the medium access. There, in contrast to a mobile radio terminal, a WPAN transceiver has much higher flexibility to allocate the transmission slot and formats. The allocation of the communication resources is a distributed process. The allocation to a specific time slot in the super frame can be modified from one superframe to the next. The controlling entity is the WPAN-MAC layer of the communicating terminals. The allocation is based on the requested data rate and the type of service to be transmitted. Furthermore, the available resources are taken into account in the allocation process. The MAC layer requests a reservation for a specific time slot or a number of time slots based on these constraints. These constraints can be split into local constraints, like the data rate to be transmitted or received and network wide constraints like the already existing slot reservation.

An example of distributed WPAN-MAC is MBOA MAC.

The proposed MBOA MAC standard draft is based on a UWB technology and is planed to be used in the frequency band between 3,1 and 10,7 GHz. First implementations using the standard work in the frequency range between 3,1 GHz and 5,0 GHz.

The wireless apparatus WAP comprises a main device MDVC including an OFDM based UWB communication interface MCINT connected between the UWB application block MBLC and the air channel.

This communication interface MCINT comprises an UWB MAC layer clocked by a clock signal MCLK and connected to the PHY layer and to the UWB application block MBLC.

For further details concerning the MAC layer and the PHY layer of the communication interface MCINT, the man skilled in the art may refer to MBOA PHY layer Technical Specification, Version 1.0, January 2005, and to MBOA MAC layer Technical Specification, Version Ov7, October 2004.

The MAC layer manages in particular the emission/reception of the UWB data stream and is incorporated by software in a control processor.

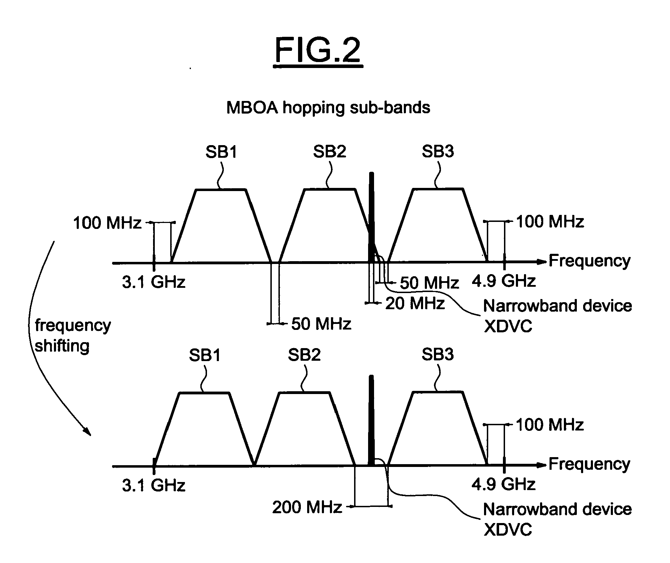

In figure 2 it can be seen that the main band of frequencies used for the operation (transmission and/or reception) of the main device MDVC lies between 3,1 GHz and 4,9 GHz. Further, the main frequency band is subdivided into three sub-bands SB1, SB2, SB3, called hopping sub-bands, which are mutually spaced. More precisely, there is a guard interval of 100 MHz between the lower limit (3,1 GHz) of the main frequency band and the beginning of the first sub-band SB1 as well as between the end of the third sub-band SB3 and the upper limit (4,9 GHz) of the main frequency band.

Further, two adjacent sub-bands are spaced by a guard interval of 50 MHz.

The allocation of the sub-bands during the transmission is made according to a predetermined hopping sequence.

In the upper part of figure 2, a narrow band device (auxiliary device) XDVC is assumed to operate in an auxiliary band of frequencies included within the second sub-band SB2. This auxiliary band of frequencies has a width of 20 MHz.

Compared to a UWB device based on techniques like MBOA standard, such a device XDVC is considered as being a narrowband device.

According to an aspect of the invention, which will be described more in details thereafter, based on the control of the transmission chain of the UWB main device MDVC and based on a frequency shifting, the interference reduction is controlled in the example depicted in figure 2, by changing the carrier frequencies of the hopping sub-bands by moving the two lower bands slightly low in the frequency domain.

As a matter of fact, the narrowband interferer XDVC lies here near the end of the second sub-band SB2. Thus, by shifting the sub-band SB1 with a shift of 100 MHz towards the low frequencies and by shifting sub-band SB2 with a shift of 150 MHz towards the low frequencies, the narrowband interferer XDVC lies now between sub-band SB2 and sub-band SB3.

Of course, the man skilled in the art will choose the frequency shift by taking into account the guard intervals of the MBOA hopping sub-bands. so that the interferences generated by the main UWB device MDVC toward the auxiliary device XDVC are greatly reduced if not eliminated.

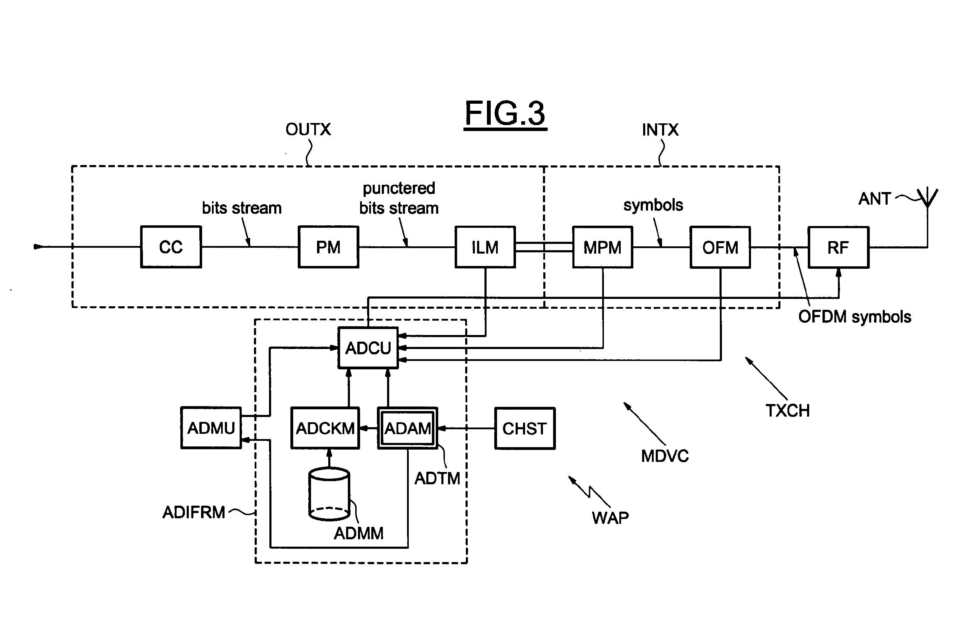

In order to reduce these interferences by using such a frequency shifting process, the main device MDVC of the wireless communication apparatus WAP comprises interference reduction means ADIFRM cooperating with the transmission chain TXCH of the main device (figure 3).

In a conventional manner, the transmission chain TXCH comprises an outer transmission block OUTX including an encoder CC, for example a convolutional encoder, receiving data from source coding means and delivering a bits stream to puncturing means PM which delivers a punctured bits stream.

The other conventional means of the transmission chain TXCH are interleaving means, ILM, followed by mapping means MPM which map the bits into symbols according to a modulation mapping scheme depending on the kind of used modulation, for example a BPSK modulation or more generally a QAM modulation. The symbols are then delivered to an OFDM modulator OFM which performs IFFT processing in order to associate each symbol to a sub-carrier and to form OFDM symbols. Each sub-carrier is modulated in accordance with the value of the corresponding symbol.

The OFDM symbols are then processed in a conventional radio frequency stage RF before being transmitted on air through antenna ANT.

The mapping means MPM as well as the OFDM modulator OFM belong to an inner transmission block INTX of the transmission stage.

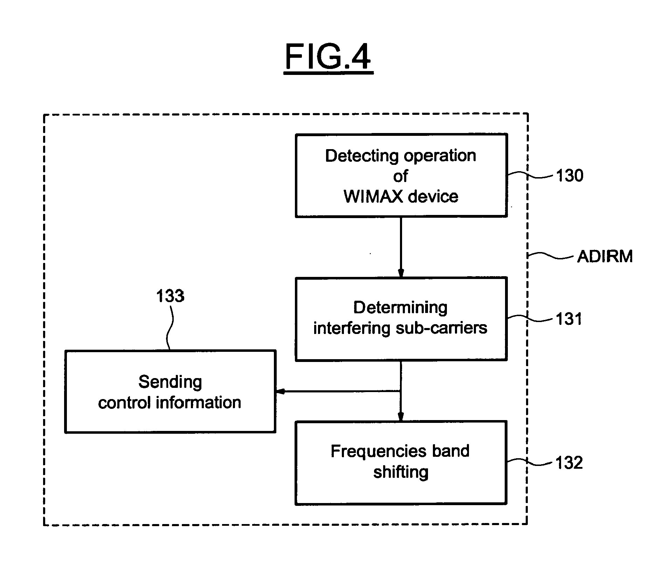

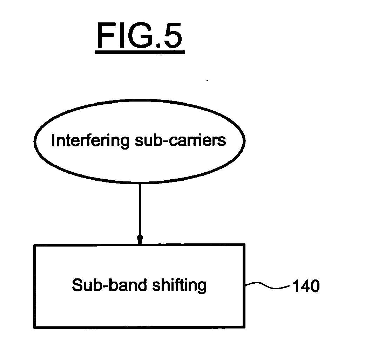

The operation of the interference reduction means ADIFRM which are depicted in figure 3 will be now described with reference to this figure 3, to figure 4 which depicts the interference reduction mode ADIRM performed by the interference reduction means and also to figures 5-7.

A conventional channel estimation unit CHST delivers a channel state information in the frequency domain. For example, this channel state information is an impulse response of the channel and contains for example, energy peaks at some frequencies. detection means ADTM comprises analysing means ADAM for analysing said channel state information and detecting the operation of the auxiliary device XDVC (step 130 in figure 4).

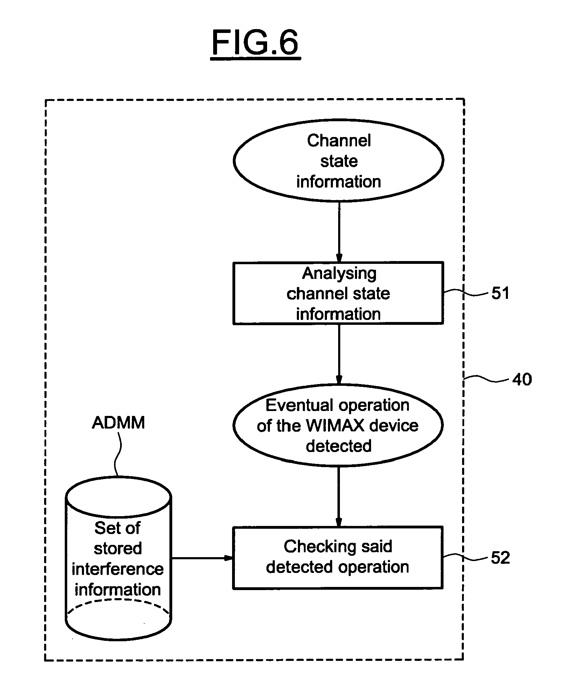

Although it is not compulsory, it is preferable that the eventual operation of the WIMAX device detected by the analysing step 51 of the channel state information (figure 6) be checked (step 52, figure 6) by checking means ADCKM connected to memory means ADMM.

These memory means ADMM contain a set of stored interference information, in particular the interference information related to the auxiliary device XDVC.

As a matter of fact, only a limited amount of possible devices can be assumed as victim devices in the corresponding main transmission band of the main device. These auxiliary devices are well defined and thus a band width and the potential carrier frequencies in use are well known. These information are stored in the main memory means.

Using this *a posteriori* knowledge interfering groups can be predefined and easily set up.

A control unit ADCU connected to the main detection means, is able to determine a group of interference sub-carriers, for example from the analysing of the channel state information. And, these interfering sub-carriers can be validated by the result of the checking operation performed by checking means ADCKM in accordance with the content of the memory means ADMM.

More precisely, for example, if the group of interference sub-carriers determined by the control unit ADCU by using the information given by the detection means ADTM, corresponds to pre-stored interfering frequencies, thus, there is a high probability that the information given by the detection means actually corresponds to a well-defined auxiliary device, and not, for example, to noise on the air channel.

The control unit ADCU is provided not only for determining the group of the interfering sub-carriers (step 131 figure 4), but also for shifting at least a part of said main band of frequencies including said group of interfering sub-carriers, with a chosen frequency shift.

More precisely, after having detected the operation of the WIMAX device and determined the interfering sub-carriers, the frequencies band is shifted (step 132), for example by a sub-band shifting 140 (figure 5).

And this frequency shifting is obtained for example by controlling the transposition frequency of the mixers contained in the radio frequency stage RF.

Of course it is necessary to indicate this frequency shift to all the devices of the UWB network which are in communication with said main device. This is performed for example by sending control information (step 133) to these devices. This control information can be sent for example by the MAC layer of the main device through control channels.

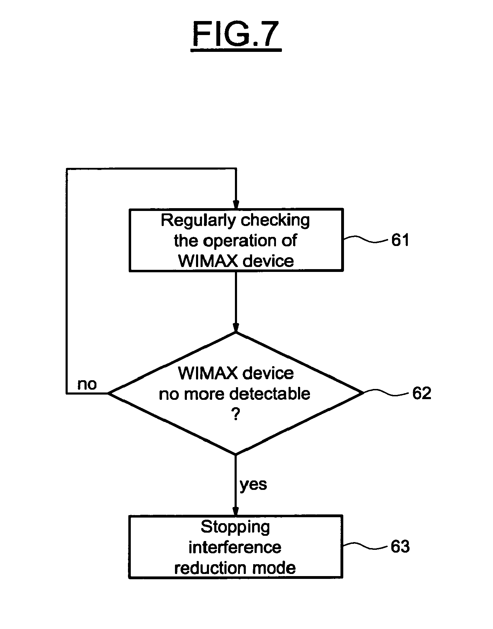

In order, in particular, to improve the operation of the main device, it is preferable that the operation of the auxiliary device XDVC be regularly checked (step 61, figure 7). If the auxiliary device is no more detectable (step 62) then, the interference reduction mode is stopped (step 63).

In this respect, the wireless communication apparatus WAP further comprises a management unit ADMU adapted to manage the operation of the interference reduction means ADIFRM and to stop eventually their operation.

The interference reduction means ADIFRM may be for example implemented in the PHY layer of the main device. The management unit ADMU may also be implemented in the PHY layer although it would be also possible that this management unit be implemented by software in the MAC layer.

Generally speaking, the control unit, the checking means, the detection means may be realised by software within a control processor and/or by hardware.

It can be noted that according to this aspect of the invention, the frequency shifting permits to minimise, if not eliminate, the interference generated by the main device MDVC towards the auxiliary device XDVC but also the interference generated by the auxiliary device XDVC towards the main device MDVC.

The sub-band shifting does not reduce the available resources on the air. The data rate needs not to be reduced. Thus no loss of communication performance accurse.

The method according to this aspect of the invention can easily be combined with other mitigation techniques like power control and adaptive sub-carrier loading.

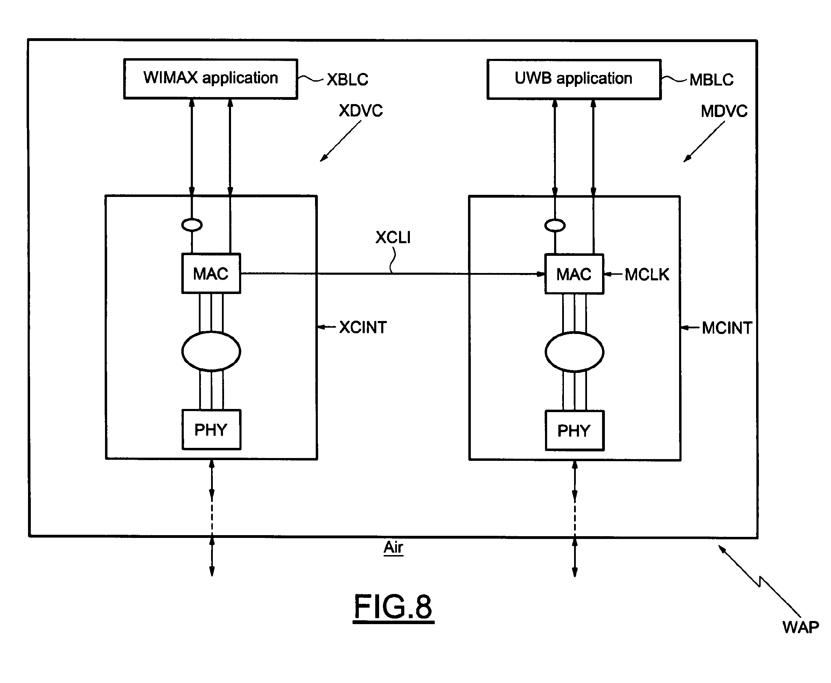

As illustrated in figure 8, it is possible that the wireless communication apparatus WAP incorporates both main device MDVC and auxiliary device XDVC.

In such a case, the MAC layer of the auxiliary device XDVC is able to deliver to the management unit contained in the MAC layer of the main device MDVC an auxiliary control information XCLI representative of the operation or of the non-operation of the auxiliary device such that said management unit is adapted to allow the operation of the interference reduction means only during the operation of said auxiliary device.

Further, it is no more necessary to analyse the channel state information. As a matter of fact, the group of interfering sub-carriers is well known for this auxiliary device and pre-stored in the main memory means of the main device.

Such an implementation of the invention will allow for the simultaneous operation of for example a WIMAX or a mobile radio and WPAN UWB air interface in a single mobile terminal. The mutual interference will be minimised if not eliminated.

Although the invention has been described with an auxiliary device being a WIMAX device, such an auxiliary device could belong to a mobile radio system defined by a mobile radio standard, like for the example GSM, UMTS, CDMA, EDGE or future beyond IMT-2000 systems under development. An auxiliary device could be a fixed satellite service (FSS) device or a general fixed wireless access device (FWA)..

For an UMTS mobile radio device collocated with an UWB main device, the auxiliary control means which delivers the indication of the operation of the UMTS device can be incorporated in or connected to the well-known L2 and L3 entities of the UMTS device (This is valid for the collocation in general. The UWB device could be collocated with a WIMAX terminal, a satellite terminal or another mobile radio terminal.)

## Claims

1. Method for reducing the interferences between a main device (MDVC) adapted to transmit information on sub-carriers having frequencies belonging to a main band of frequencies, and at least one auxiliary device (XDVC) adapted to emit and/or receive information within an auxiliary band of frequencies, said auxiliary band being narrower than said main band and included within said main band, said method comprising an interference reduction mode (ADIRM) for reducing the interference between said main device and said auxiliary device, said interference reduction mode being performed within said main device and including detecting (130) an emission from and/or a reception performed by said at least one auxiliary device, determining (131) from said detection step a group of at least one sub-carrier having frequency interfering with said auxiliary band of frequencies, and frequency shifting (132) at least a part of said main band of frequencies including said group of at least one interfering sub-carriers with a chosen frequency shift such that at least a part of said auxiliary band is excluded from said main band of frequencies.

2. Method according to claim 1, wherein the frequency shift is chosen such that the whole auxiliary band is excluded from said main band of frequencies.

3. Method according to claim 1 or 2, wherein the frequency shift is at least equal to the width of the frequency band of said at least one auxiliary device.

4. Method according to any one of the preceding claims, wherein the main band of frequencies is subdivided into several different mutually spaced sub-bands, and the shifting step comprises frequency shifting (140) at least the sub-band which contains at least a part of said group of interfering sub-carriers.

5. Method according to any one of the preceding claims, wherein said main device comprises a transmission chain containing a radiofrequency stage including controllable transposition means, and the frequency shifting step comprises modifying the transposition frequency of said transposition means.

6. Method according to any one of claims 1 to 5, wherein said detecting step of the interference reduction mode comprises analysing a channel state information and detecting the operation of said at least one auxiliary device from said channel state information.

7. Method according to claim 6, wherein said detecting step further comprises checking said operation detection by using a set of stored interference information respectively associated to a set of several different auxiliary devices.

8. Method according to any one of the claims 1 to 7, wherein said interference reduction mode comprises regularly checking the operation of said auxiliary device and if said auxiliary device is no more detectable, said additional interference reduction mode concerning said no more detectable auxiliary device is stopped.

9. Method according to any one of claims 1 to 7, wherein said main device (MDVC) and said at least one auxiliary device (XDVC) are all together incorporated within a single wireless communication apparatus.

10. Method according to claim 9, wherein an indication of said group of at least one sub-carrier having frequencies interfering with said auxiliary band of frequencies of said auxiliary device is stored within said apparatus and said detecting step of the additional interference reduction mode comprises receiving from said auxiliary device an additional control information representative of the operation or of the non operation of said auxiliary device such that said additional interference reduction mode is performed only during the operation of said auxiliary device.

11. Method according to any one of the preceding claims, wherein the main device belongs to a multi-carrier based Ultra Wide Band communication system.

12. Method according to claim 11, wherein the main device belongs to an OFDM based Ultra Wide Band communication system.

13. Method according to any one of the preceding claims, wherein said at least one auxiliary device belongs to a fix wireless access system like a WIMAX system or to a mobile radio system defined by a mobile radio standard, like for example GSM, UMTS, CDMA, EDGE.

14. Method according to any one of claims 1 to 12, wherein said at least one auxiliary device belongs to a fix satellite service system.

15. Wireless communication apparatus, comprising a main device (MDVC) having a main transmission chain (TXCH) for transmitting information on sub-carriers having frequencies belonging to a main band of frequencies, and additional interference reduction means (ADIFRM) for reducing the interference between said main device and at least one auxiliary device (XDVC) adapted to emit and/or receive information within an auxiliary band of frequencies, said auxiliary band being narrower than said main band and included within said main band, said interference reduction means including detecting means (ADTM) for detecting an emission from and/or a reception performed by said at least one auxiliary device, a control unit (ADCV) connected to said detecting means for determining a group of at least one sub-carrier having frequencies interfering with said auxiliary band of frequencies, and for frequency shifting at least a part of said main band of frequencies including said group with a chosen frequency shift such that at least a part of said auxiliary band is excluded from said main band of frequencies.

16. Apparatus according to claim 15, wherein the frequency shift is chosen such that the whole auxiliary band is excluded from said main band of frequencies.

17. Apparatus according to claim 15 or 16, wherein the frequency shift is at least equal to the width of the frequency band of said at least one auxiliary device.

18. Apparatus according to any one of claims 15 to 17, wherein the main band of frequencies is subdivided into several different mutually spaced sub-bands, and the control unit (ADCU) is adapted to shift at least the sub-band which contains at least a part of said group of interfering sub-carriers.

19. Apparatus according to any one of claims 15 to 18, wherein the transmission chain comprises a radiofrequency stage including controllable transposition means, and the control unit (ADCU) is adapted to modify the transposition frequency of said transposition means for performing said frequency shifting.

20. Apparatus according to any one of claims 15 to 19, further comprising a channel estimation unit (CHST) adapted to deliver a channel state information, wherein said detection means (ADTM) comprises analysing means (ADAM) for analysing said channel state information and detecting the operation of said at least one auxiliary device from said channel state information.

21. Apparatus according to claim 20, further comprising memory means (ADMM) for storing a set of interference information respectively associated to a set of several different auxiliary devices, and checking means (ADCKM) for checking said operation detection by using said stored set of interference information.

22. Apparatus according to any one of the claims 15 to 21, further comprising a management unit (ADMU) adapted to manage the operation of said interference reduction means, wherein said interference reduction means are further adapted to regularly check the operation of said auxiliary device and if said auxiliary device is no more detectable said management unit is adapted to stop the interference reduction concerning said no more detectable auxiliary device.

23. Apparatus according to any one of claims 15 to 19, wherein said main device (MDVC) and said at least one auxiliary device (XDVC) are all together incorporated within a single wireless communication apparatus.

24. Apparatus according to claim 23, comprising a management unit (ADMU) adapted to manage the operation of said interference reduction means and memory means for storing an indication of said group of at least one sub-carrier having frequencies interfering with said auxiliary band of frequencies of said auxiliary device, wherein said auxiliary device comprises auxiliary control means (MAC) for delivering an auxiliary control information representative of the operation or of the non operation of said auxiliary device such that said management unit (ADMU) is adapted to allow the operation of said main interference reduction means only during the operation of said auxiliary device.

25. Apparatus according to any one of claims 15 to 24, wherein the main device (MDVC) belongs to a multi-carrier based Ultra Wide Band communication system.

26. Apparatus according to claim 25, wherein the main device belongs to an OFDM based Ultra Wide Band communication system.

27. Apparatus according to claim 25 or 26, wherein the physical layer (PHY) of the main device incorporates the interference reduction means.

28. Apparatus according to any one of claims 15 to 27, wherein said at least one auxiliary device (XDVC) belongs to a fix wireless access system like a WIMAX system or to a mobile radio system defined by a mobile radio standard, like for example GSM, UMTS, CDMA, EDGE.

29. Apparatus according to any one claims 15 to 27, wherein said at least one auxiliary device (XDVC) belongs to a fix satellite service system.
